# EUROPEAN PATENT APPLICATION

(11) **EP 4 043 124 A1**
(43) Date of publication of application: **17.08.2022**
(21) Application number: 22155535.2
(22) Date of filing: 08.02.2022
(51) Int. Cl.: B22F 1/102, B22F 1/142, B22F 10/14, B33Y 70/00

(54) **ADDITIVE MANUFACTURING POWDER, METHOD FOR PRODUCING SAME, ADDITIVE MANUFACTURED PRODUCT, AND METAL SINTERED BODY**

(30) Priority: 10.02.2021 JP 2021019770
(71) Applicant: Seiko Epson Corporation, Tokyo 160-8801 (JP)
(72) Inventor: WAKABAYASHI, Momoko, Suwa-shi, 392-8502 (JP); MATSUMOTO, Yasutaka, Suwa-shi, 392-8502 (JP)
(74) Representative: Miller Sturt Kenyon

(57) **Abstract**

An additive manufacturing powder includes: a metal powder; and a coating film provided on a particle surface of the metal powder and containing a compound derived from a coupling agent having a functional group. The additive manufacturing powder has an average particle diameter of 3.0 µm or more and 30.0 µm or less. The functional group includes a cyclic structure-containing group, a fluoroalkyl group, or a fluoroaryl group.

## Description

The present application is based on, and claims priority from JP Application Serial Number 2021-019770, filed February 10, 2021, the disclosure of which is hereby incorporated by reference herein in its entirety.

### BACKGROUND

### 1. Technical Field

The present disclosure relates to an additive manufacturing powder, a method for producing an additive manufacturing powder, an additive manufactured product, and a metal sintered body.

### 2. Related Art

In recent years, additive manufacturing methods using metal powders are widespread as a technique for shaping three-dimensional objects. This technique includes calculating a cross-sectional shape of a three-dimensional object obtained by thinly slicing the three-dimensional object on a plane orthogonal to a laminating direction, forming a powder layer by layering a metal powder, and solidifying a part of the powder layer based on the shape obtained by the calculation. In this technique, the three-dimensional object is shaped by repeating forming a powder layer and solidifying a part of the powder layer.

According to principles of solidification, a fused deposition molding (FDM) method, a selective laser sintering (SLS) method, a binder jetting method, and the like are known as methods for shaping a three-dimensional object.

As a modification of the selective laser sintering method, JP-A-2017-25392 discloses a method for producing an EB sintering type 3D printer product using electron beams (EB) instead of lasers. According to this method, a metal molded product is produced by laminating a surface-treated metal powder for an EB sintering type 3D printer, preheating the metal powder if desired, and then sintering the metal powder by EB irradiation. The surface-treated metal powder for the EB sintering type 3D printer is a powder obtained by subjecting the surface of the metal powder produced by a known method to a surface treatment with a coupling agent. By using such a metal powder subjected to the surface treatment, conductivity during lamination is improved. Therefore, the metal powder can be suitably sintered by EB. In addition, partial sintering due to preheating can be prevented.

However, the surface-treated metal powder described in JP-A-2017-25392 has a problem that fluidity thereof decreases at a high temperature or when the metal powder absorbs moisture. In a case where the fluidity decreases at a high temperature, the surface-treated metal powder is difficult to be reused when, for example, heated in an additive manufacturing process with a 3D printer. Even if the surface-treated metal powder is reused, dimensional accuracy of a product decreases.

### SUMMARY

An additive manufacturing powder according to an application example of the present disclosure includes: a metal powder; and a coating film provided on a particle surface of the metal powder and containing a compound derived from a coupling agent having a functional group, in which the additive manufacturing powder has an average particle diameter of 3.0 µm or more and 30.0 µm or less, and the functional group includes a cyclic structure-containing group, a fluoroalkyl group, or a fluoroaryl group.

A method for producing an additive manufacturing powder according to an application example of the present disclosure includes: preparing a metal powder; reacting a coupling agent having a functional group with the metal powder to adhere the coupling agent to a particle surface of the metal powder; and heating the metal powder to which the coupling agent is adhered and forming a coating film on the particle surface, to obtain the additive manufacturing powder, in which the additive manufacturing powder has an average particle diameter of 3.0 µm or more and 30.0 µm or less, and the functional group includes a cyclic structure-containing group, a fluoroalkyl group, or a fluoroaryl group.

An additive manufactured product according to an application example of the present disclosure contains: the additive manufacturing powder according to the application example of the present disclosure; and a binder configured to bind particles of the additive manufacturing powder.

A metal sintered body according to an application example of the present disclosure is a sintered body of the additive manufactured product according to the application example of the present disclosure.

### BRIEF DESCRIPTION OF THE DRAWINGS

FIG. 1 is a flowchart illustrating a method for manufacturing an additive manufactured product.
FIG. 2 is a diagram illustrating a method for manufacturing an additive manufactured product according to an embodiment.
FIG. 3 is a diagram illustrating the method for manufacturing an additive manufactured product according to the embodiment.
FIG. 4 is a diagram illustrating the method for manufacturing an additive manufactured product according to the embodiment.
FIG. 5 is a diagram illustrating the method for manufacturing an additive manufactured product according to the embodiment.
FIG. 6 is a diagram illustrating the method for manufacturing an additive manufactured product according to the embodiment.
FIG. 7 is a diagram illustrating the method for manufacturing an additive manufactured product according to the embodiment.
FIG. 8 is a diagram illustrating the method for manufacturing an additive manufactured product according to the embodiment.
FIG. 9 is a diagram illustrating the method for manufacturing an additive manufactured product according to the embodiment.
FIG. 10 is a diagram illustrating the method for manufacturing an additive manufactured product according to the embodiment.
FIG. 11 is a cross-sectional view schematically showing an additive manufacturing powder according to the embodiment.
FIG. 12 is a flowchart illustrating a method for producing the additive manufacturing powder according to the embodiment.
FIG. 13 is a table schematically showing a state of a coupling agent containing a trialkoxy group after hydrolysis and before a reaction with hydroxy groups generated on a surface of a metal particle, a state immediately after formation of a coating film, and a state after a functional group contained in the coating film is thermally decomposed.
FIG. 14 is a graph showing comparison of bulk densities of powders in Comparative Example 1, Reference Example, and Example 1.
FIG. 15 is a graph showing a relation between a heating treatment time on a horizontal axis and a bulk density on a vertical axis of the powders in Example 1 and Comparative Example 1.
FIG. 16 is a graph showing comparison of tap densities of the powders in Comparative Example 1, Reference Example, and Example 1.

### DESCRIPTION OF EXEMPLARY EMBODIMENTS

Hereinafter, preferred embodiments of an additive manufacturing powder and a method for producing an additive manufacturing powder, an additive manufactured product, and a metal sintered body will be described in detail with reference to the accompanying drawings.

### 1. Method for Manufacturing Additive Manufactured Product

First, a method for manufacturing an additive manufactured product will be described.

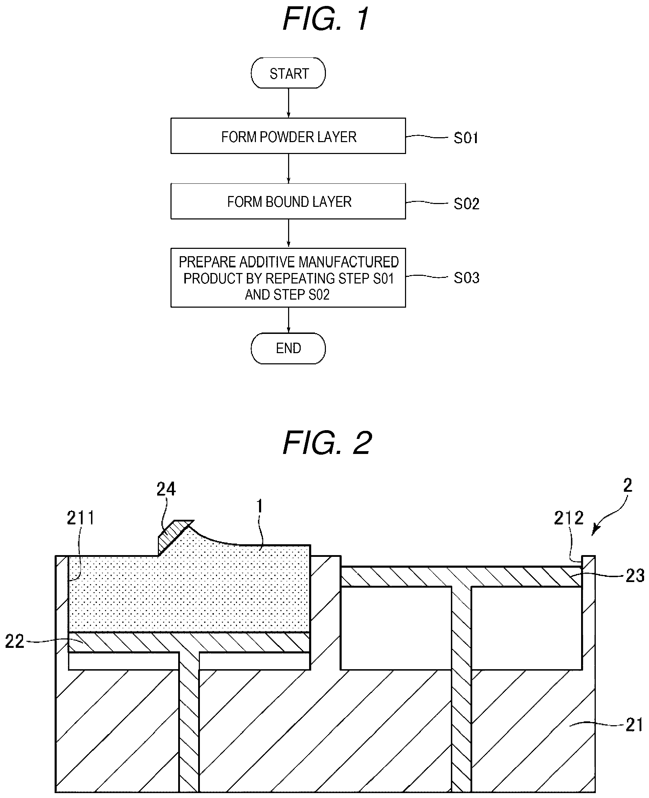

FIG. 1 is a flowchart illustrating the method for manufacturing an additive manufactured product. FIGS. 2 to 10 are diagrams illustrating the method for manufacturing an additive manufactured product according to an embodiment.

The method for manufacturing an additive manufactured product shown in FIGS. 1 to 10 is a method referred to as a binder jetting method, and as shown in FIG. 1, includes a powder layer forming step S01, a binder solution supply step S02, and a repeating step S03. In the powder layer forming step S01, a powder layer 31 is formed by spreading an additive manufacturing powder 1. In the binder solution supply step S02, a binder solution 4 is supplied to a predetermined region of the powder layer 31 to bind particles in the powder layer 31, so as to obtain a bound layer 41. In the repeating step S03, an additive manufactured product 5 is obtained by repeating the powder layer forming step S01 and the binder solution supply step S02 once or twice or more. Hereinafter, each step will be described in sequence.

### 1.1. Additive Manufacturing Apparatus

First, before explanation of the powder layer forming step S01, an additive manufacturing apparatus 2 will be described.

The additive manufacturing apparatus 2 includes an apparatus main body 21 provided with a powder storage unit 211 and a shaping unit 212, a powder supply elevator 22 provided in the powder storage unit 211, a shaping stage 23 provided in the shaping unit 212, and a coater 24 and a solution supply unit 25 movably provided on the apparatus main body 21.

The powder storage unit 211 is a recess having an open upper portion and provided in the apparatus main body 21. The additive manufacturing powder 1 is stored in the powder storage unit 211. An appropriate amount of the additive manufacturing powder 1 stored in the powder storage unit 211 is supplied to the shaping unit 212 by the coater 24.

The powder supply elevator 22 is disposed at a bottom portion of the powder storage unit 211. The powder supply elevator 22 is movable in an up-down direction in FIGS. 2 to 9 with the additive manufacturing powder 1 placed thereon. By moving the powder supply elevator 22 upward, the additive manufacturing powder 1 placed on the powder supply elevator 22 is pushed up and extruded from the powder storage unit 211. Accordingly, the extruded additive manufacturing powder 1 can be moved to a shaping unit 212 side as described later.

The shaping unit 212 is a recess having an open upper portion and provided in the apparatus main body 21. The additive manufacturing powder 1 supplied from the powder storage unit 211 is spread in a layer on the shaping unit 212.

The shaping stage 23 is disposed at a bottom portion of the shaping unit 212. The shaping stage 23 is movable in the up-down direction in FIGS. 2 to 9 in a state where the additive manufacturing powder 1 is spread. By appropriately setting a height of the shaping stage 23, an amount of the additive manufacturing powder 1 spread on the shaping stage 23 can be adjusted.

The coater 24 is provided to be movable from the powder storage unit 211 to the shaping unit 212 in a left-right direction in FIGS. 2 to 9.

The solution supply unit 25 is implemented by, for example, an inkjet head, a dispenser, or the like, and is two-dimensionally movable in the shaping unit 212 in the left-right direction and a paper thickness direction in FIGS. 2 to 9. The solution supply unit 25 can supply a target amount of the binder solution 4 to a target location.

### 1.2. Powder Layer Forming Step

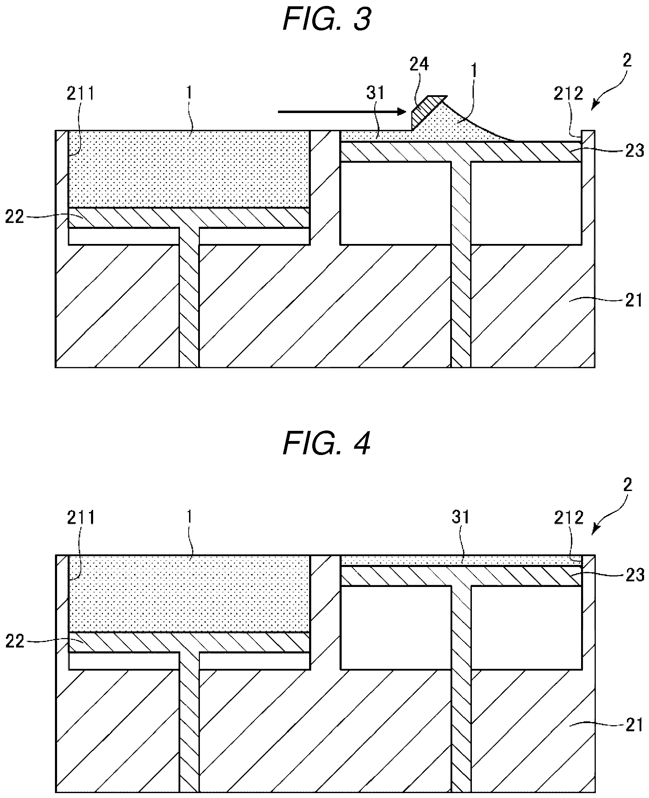

Next, the powder layer forming step S01 using the above-mentioned additive manufacturing apparatus 2 will be described. In the powder layer forming step S01, the additive manufacturing powder 1 is spread on the shaping stage 23 to form the powder layer 31. Specifically, as shown in FIGS. 2 and 3, the additive manufacturing powder 1 stored in the powder storage unit 211 is dragged onto the shaping stage 23 and smoothed to a uniform thickness with the coater 24. Accordingly, the powder layer 31 shown in FIG. 4 is obtained. At this time, a thickness of the powder layer 31 can be adjusted by slightly lowering an upper surface of the shaping stage 23 from an upper end of the shaping unit 212. The additive manufacturing powder 1 according to the present embodiment is a powder having high fluidity, as will be described later. Therefore, the powder layer 31 having a high filling rate can be obtained.

### 1.3. Binder Solution Supply Step

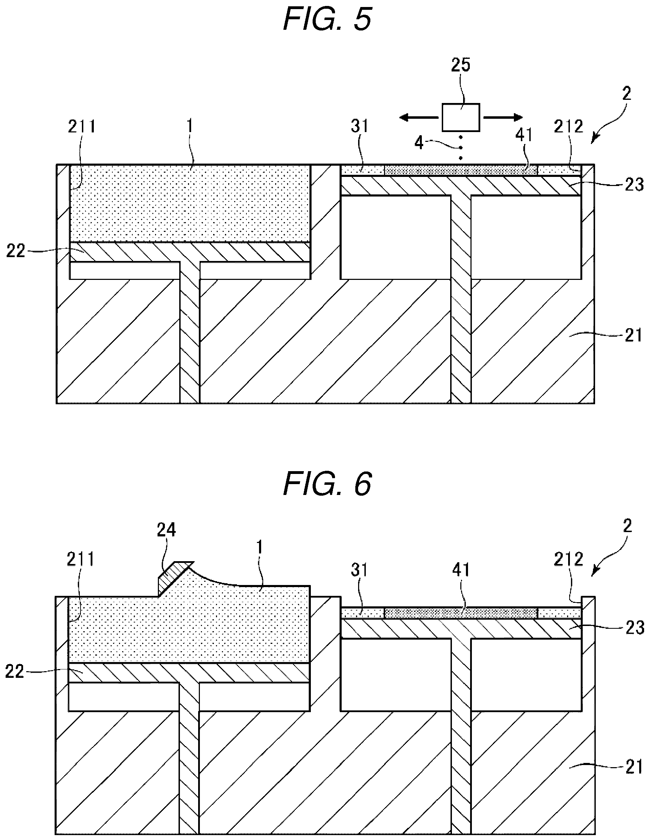

In the binder solution supply step S02, as shown in FIG. 5, the solution supply unit 25 supplies the binder solution 4 to a desired region of the powder layer 31. Accordingly, in the powder layer 31, particles in the region to which the binder solution 4 is supplied are bound together to obtain the bound layer 41. The bound layer 41 is formed by binding together the particles of the additive manufacturing powder 1 with a binder, and has a shape retention property of not being broken due to the own weight thereof, or a more excellent shape retention property.

The bound layer 41 may be heated at the same time as or after the supply of the binder solution 4. Accordingly, volatilization of a solvent contained in the binder solution 4 is promoted, and the binding of the particles due to solidification or hardening of the binder is promoted. When the binder contains a photocurable resin or an ultraviolet curable resin, light irradiation or ultraviolet irradiation may be performed instead of or in combination with heating.

A heating temperature during the heating is not particularly limited, and is preferably 50°C or higher and 250°C or lower, and more preferably 70°C or higher and 200°C or lower. Accordingly, when the additive manufacturing powder 1 not bound by the binder solution 4 is reused, modification of the additive manufacturing powder 1 due to heating is prevented, and the volatilization of the solvent and the solidification or hardening of the binder can be sufficiently achieved.

The binder solution 4 is not particularly limited as long as it is a liquid containing a component having stickiness or adhesion and capable of binding the particles of the additive manufacturing powder 1. Examples of the solvent in the binder solution 4 include water, alcohols, ketones, and carboxylic acid esters, and the solvent may be a mixed liquid containing at least two of the above. Examples of a solute in the binder solution 4, that is, the binder, include fatty acids, paraffin wax, microwax, polyethylene, polypropylene, polystyrene, acrylic resins, polyamide resins, polyester, stearic acid, polyvinylpyrrolidone (PVP), polyvinyl alcohol (PVA), and polyethylene glycol (PEG).

### 1.4. Repeating Step

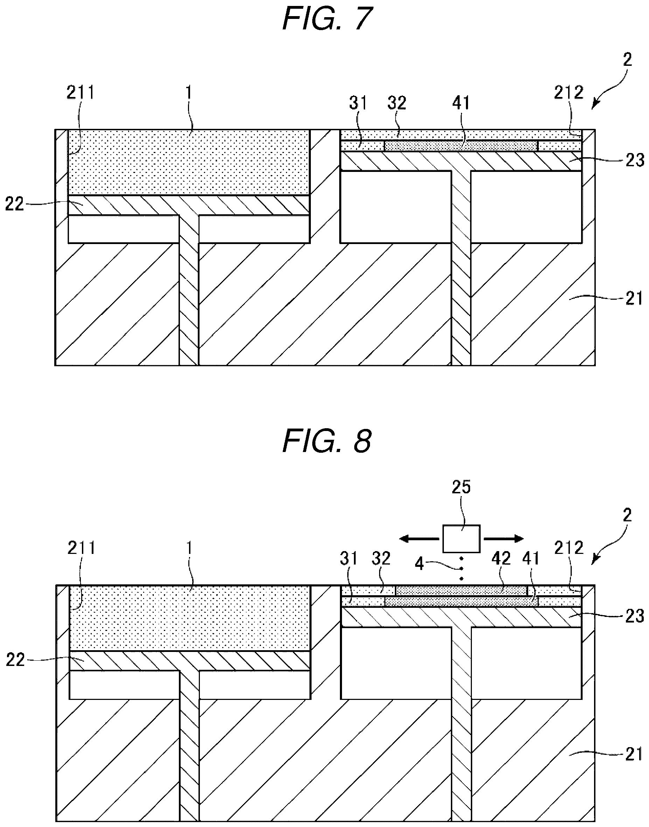

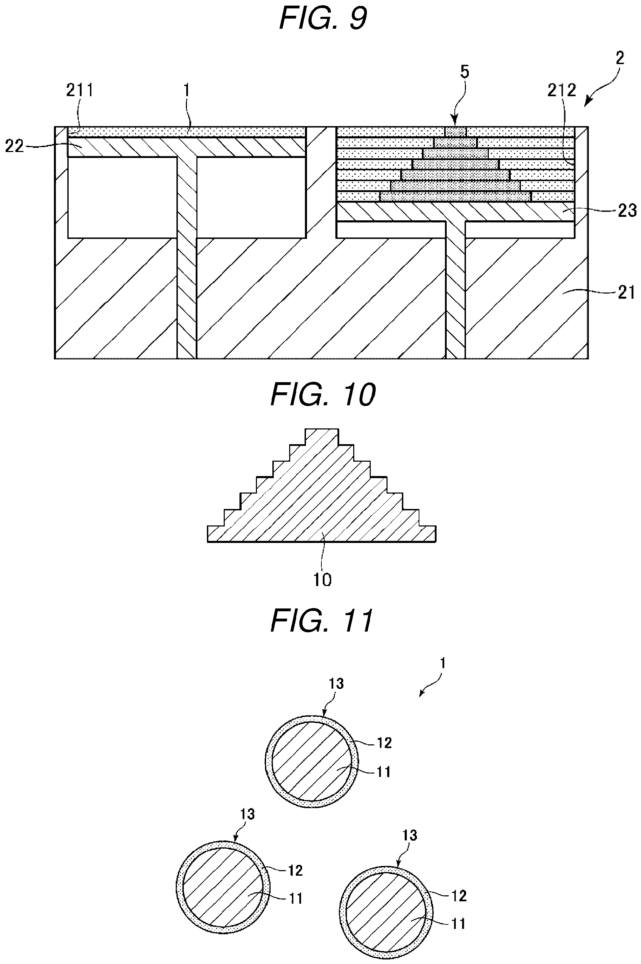

In the repeating step S03, the powder layer forming step S01 and the binder solution supply step S02 are repeated one or more times. Accordingly, the bound layer 41 can be stacked to a required height. Specifically, as shown in FIGS. 6 and 7, a new powder layer 32 is formed on the formed bound layer 41. region of the powder layer 32. Accordingly, in the powder layer 32, particles in the region to which the binder solution 4 is supplied are bound together to obtain a bound layer 42. The bound layer 42 is formed by binding the particles of the additive manufacturing powder 1 with the binder, and has a shape retention property of not being broken due to the own weight thereof, or a more excellent shape retention property. By repeating the formation of the powder layer 32 and the bound layer 42 in this way, as shown in FIG. 9, the additive manufactured product 5 having a desired shape is obtained. The additive manufactured product 5 is an aggregate of bound layers including the bound layer 41 and the bound layer 42, and the additive manufacturing powder 1 that does not constitute the additive manufactured product 5 is recovered and reused as needed.

### 2. Method for Manufacturing Metal Sintered Body

Next, a method for manufacturing a metal sintered body using the additive manufactured product obtained as described above will be described.

First, the additive manufactured product 5 is taken out from the shaping unit 212, and the additive manufactured product 5 is subjected to a sintering treatment using a baking furnace or the like. Accordingly, as shown in FIG. 10, a metal sintered body 10, which is a sintered body of the additive manufactured product 5, is obtained.

The additive manufactured product 5 may be subjected to a debindering treatment before the sintering treatment. The debindering treatment is a treatment for removing at least a part of the binder by heating the additive manufactured product 5.

The sintering treatment is a treatment of sintering particles of a metal powder by heating the additive manufactured product 5 or the debindered additive manufactured product 5. As an example of heating conditions, the additive manufactured product 5 is heated at 980°C or higher and 1330°C or lower for 0.2 hours or longer and 7 hours or shorter. Examples of a heating atmosphere include an air atmosphere, an inert gas atmosphere, and a reduced pressure atmosphere.

### 3. Additive Manufacturing Powder

Next, the additive manufacturing powder according to the embodiment will be described.

FIG. 11 is a cross-sectional view schematically showing the additive manufacturing powder 1 according to the embodiment.

The additive manufacturing powder 1 according to the present embodiment is a powder to be used in various additive manufacturing methods such as the binder jetting method described above.

An average particle diameter of the additive manufacturing powder 1 is 3.0 µm or more and 30.0 µm or less, preferably 4.0 µm or more and 15.0 µm or less, and more preferably 5.0 µm or more and 10.0 µm or less.

By setting the average particle diameter of the additive manufacturing powder 1 within the above range, the metal sintered body 10 having good surface roughness and high dimensional accuracy can be obtained by the additive manufacturing method described above.

As shown in FIG. 11, the additive manufacturing powder 1 contains a plurality of surface-coated particles 13 each containing metal particles 11 constituting the metal powder and a coating film 12 covering surfaces of the metal particles 11. Since the additive manufacturing powder 1 including such surface-coated particles 13 has high fluidity, a filling property thereof when leveled is high.

A constituent material of the metal particles 11 is not particularly limited, and may be any material as long as it has sinterability. Examples thereof include simple substances such as Fe, Ni, Co, and Ti, and alloys and intermetallic compounds containing these simple substances as main components.

Examples of a Fe-based alloy include stainless steels such as austenite stainless steels, martensitic stainless steels, and precipitation hardening stainless steels, low carbon steel, carbon steel, heat resistant steel, die steel, high speed tool steel, Fe-Ni-based alloys, and Fe-Ni-Co-based alloys.

Examples of a Ni-based alloy include Ni-Cr-Fe-based alloys, Ni-Cr-Mo-based alloys, and Ni-Fe-based alloys.

Examples of a Co-based alloy include Co-Cr-based alloys, Co-Cr-Mo-based alloys, and Co-AI-W-based alloys.

Examples of a Ti-based alloy include alloys of Ti and metal elements such as Al, V, Nb, Zr, Ta, and Mo, and specifically, Ti-6AI-4V and Ti-6AI-7Nb.

The coating film 12 is formed by reacting a coupling agent having a functional group with the surfaces of the metal particles 11. Therefore, the coating film 12 contains a compound derived from the coupling agent having a functional group, and exhibits properties derived from the functional group.

As the functional group, one containing a cyclic structure-containing group, a fluoroalkyl group, or a fluoroaryl group is used.

The cyclic structure-containing group is a functional group having a cyclic structure. Examples of the cyclic structure-containing group include aryl groups such as a phenyl group, a tolyl group, a xylyl group, and a naphthyl group, and cyclic ether groups such as an epoxy group, a 3,4-epoxycyclohexyl group and an oxetanyl group.

The fluoroalkyl group is an alkyl group having 1 to 16 carbon atoms, which is substituted with one or more fluorine atoms. Particularly, the fluoroalkyl group is preferably a perfluoroalkyl group.

The fluoroaryl group is an aryl group having 6 to 20 carbon atoms, which is substituted with one or more fluorine atoms. Particularly, the fluoroaryl group is preferably a perfluoroaryl group.

These functional groups have relatively good heat resistance. Therefore, the coating film 12 containing the compound derived from the coupling agent having these functional groups is not easily modified even in a high temperature environment. Therefore, the surface-coated particles 13 are less likely to aggregate, and fluidity thereof is less likely to decrease even in a high temperature environment. As a result, the additive manufacturing powder 1, which can be laminated well and can be used to produce the additive manufactured product 5 having high dimensional accuracy even in reuse, can be obtained.

These functional groups also have good hydrophobicity. Therefore, the coating film 12 containing the compound derived from the coupling agent having these functional groups provides excellent fluidity to the additive manufacturing powder 1 even in a humid environment.

As described above, the additive manufacturing powder 1 according to the present embodiment contains particles of the metal powder (the metal particles 11) and the coating film 12 provided on the surfaces of the metal particles 11. The coating film 12 contains the compound derived from the coupling agent having a functional group.

The average particle diameter of the additive manufacturing powder 1 is 3.0 µm or more and 30.0 µm or less. The functional group includes a cyclic structure-containing group, a fluoroalkyl group, or a fluoroaryl group.

Such an additive manufacturing powder 1 is difficult to aggregate and has high fluidity even in a high temperature environment despite a small average particle diameter thereof. Therefore, the additive manufacturing powder 1 can be used to produce an additive manufactured product having high dimensional accuracy even when reused. The additive manufacturing powder 1 also has low hygroscopicity even in a humid environment. Therefore, the additive manufacturing powder 1 having excellent fluidity even in a humid environment can be obtained.

An average thickness of the coating film 12 is not particularly limited, and is preferably 100 nm or less, more preferably 0.5 nm or more and 50 nm or less, and still more preferably 1 nm or more and 10 nm or less. Accordingly, a film thickness required to maintain the coating film 12 can be secured.

The coating film 12 may be a multilayer film in which molecules of the above-mentioned compound are laminated in a plurality of layers, for example, 2 layers or more and 10 layers or less, and a monomolecular film made of the above-mentioned compound is preferred. A thickness of the coating film 12 that is a monomolecular film can be minimized.

The monomolecular film is a film formed by self-assembly of the coupling agent. Due to the coupling agent, molecules, which have affinity for the surfaces of the metal particles 11, are densely arranged on the surfaces, so that a film having a thickness equivalent to one molecule can be efficiently formed.

Since the additive manufacturing powder 1 according to the present embodiment contains the surface-coated particles 13 provided with the coating film 12 derived from the coupling agent having a specific functional group, the heat resistance is high as described above.

Specifically, when the additive manufacturing powder 1 is heated in air at 200°C for 24 hours, a decrease rate in bulk density with respect to a bulk density before heating is preferably 2.5% or less, more preferably 2.0% or less, and still more preferably 1.0% or less. Accordingly, when the additive manufacturing powder 1 not bound in the above-mentioned additive manufacturing method is reused, modification due to heating is sufficiently prevented. As a result, even when the reused additive manufacturing powder 1 and a newly added additive manufacturing powder 1 are mixed, a difference in fluidity between the two powders can be reduced. Therefore, the additive manufacturing powder 1, whose decrease rate in bulk density is within the above range, is suitable for reuse.

The bulk density of the additive manufacturing powder 1 is measured by a method for measuring an apparent density of metal powders specified in JIS Z2504:2012. The decrease rate in bulk density with respect to the bulk density before heating is obtained by measuring a decrease amount from the bulk density before heating to a bulk density after heating, and then dividing the decrease amount by the bulk density before heating to obtain a quotient as the decrease rate. Therefore, when the bulk density increases after heating, the decrease rate is zero.

Similarly, when the additive manufacturing powder 1 according to the present embodiment is heated in air at 200°C for 24 hours, a decrease rate in tap density with respect to a tap density before heating is preferably 10.0% or less, more preferably 5.0% or less, and still more preferably 2.5% or less. Accordingly, when the additive manufacturing powder 1 not bound in the above-mentioned additive manufacturing method is reused, modification due to heating is sufficiently prevented. As a result, even when the reused additive manufacturing powder 1 and a newly added additive manufacturing powder 1 are mixed, a difference in fluidity between the two powders can be reduced. Therefore, the additive manufacturing powder 1, whose decrease rate in tap density is within the above range, is particularly suitable for reuse.

The tap density of the additive manufacturing powder 1 is measured by Powder Tester (registered trademark) PT-X, which is a powder property evaluation device and manufactured by Hosokawa Micron Corporation. The decrease rate in tap density with respect to the tap density before heating is obtained by measuring a decrease amount from the tap density before heating to a tap density after heating, and then dividing the decrease amount by the tap density before heating to obtain a quotient as the decrease rate. Therefore, when the tap density increases after heating, the decrease rate is zero.

### 4. Method for Producing Additive Manufacturing Powder

Next, the method for producing the additive manufacturing powder according to the embodiment will be described.

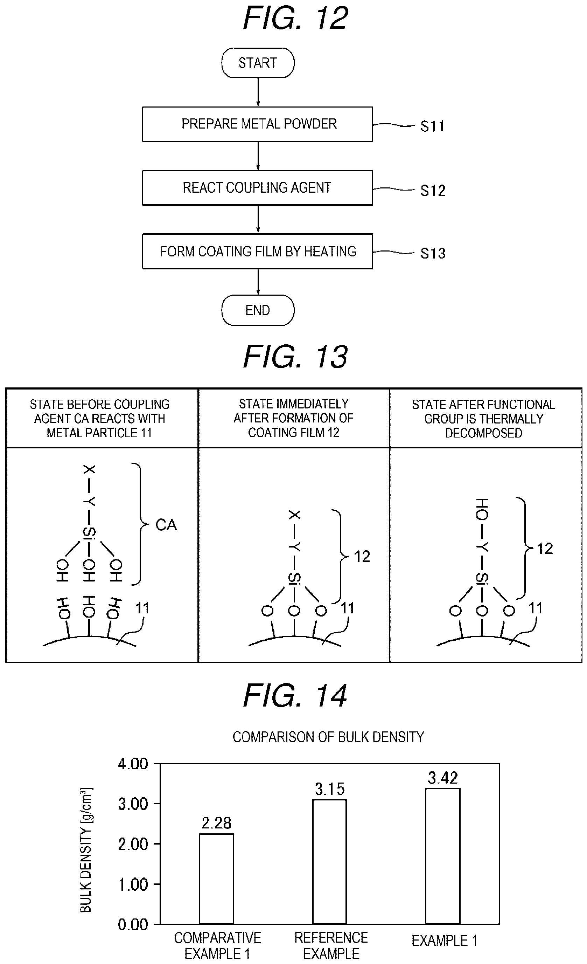

FIG. 12 is a flowchart illustrating the method for producing the additive manufacturing powder according to the embodiment.

The method for producing the additive manufacturing powder shown in FIG. 12 includes a preparation step S11, a coupling agent reaction step S12, and a coating film formation step S13.

### 4.1. Preparation Step

In the preparation step S11, a metal powder containing the metal particles 11 is prepared. The metal particles 11 may be produced by any method, are preferably produced by an atomizing method such as a water atomizing method, a gas atomizing method, or a rotating water flow atomizing method, and are more preferably produced by the water atomizing method or the rotating water flow atomizing method. The surfaces of the metal particles 11 produced by these methods are likely to be covered with a water-derived hydroxy group. Therefore, adhesion of the coating film 12 can be enhanced, and the fluidity of the surface-coated particles 13 can be sufficiently enhanced even when the coating film 12 is thin. As a result, the additive manufactured product 5 having an occupancy rate of the metal particles 11 higher than that of the coating film 12 and a shrinkage rate smaller than that of the coating film 12 during sintering can be obtained.

### 4.2. Coupling Agent Reaction Step

In the coupling agent reaction step S12, the coupling agent having a functional group is reacted with the metal powder. Accordingly, the coupling agent is adhered to the surfaces of the metal particles 11.

Examples of this operation include an operation (Method 1) of charging both the metal particles 11 and the coupling agent into a chamber and then heating an inside of the chamber; an operation (Method 2) of charging the metal particles 11 into a chamber and then spraying the coupling agent into the chamber while stirring the metal particles 11; and an operation (Method 3) of adding water, the coupling agent, and an alkaline solution such as ammonia or sodium hydroxide into a primary alcohol such as methanol, ethanol, and isopropyl alcohol, followed by stirring, filtering, and drying.

Examples of the coupling agent include a silane coupling agent, a titanium coupling agent, and a zirconium coupling agent.

The following chemical formula is an example of a molecular structure of the silane coupling agent.

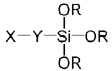

In the above formula, X represents a functional group, Y represents a spacer, and OR represents a hydrolysable group. R represents, for example, a methyl group, or an ethyl group.

The hydrolysable group is, for example, an alkoxy group, or a halogen group, and in a case of the alkoxy group, silanol is produced by hydrolysis. The silanol reacts with the hydroxy group generated on the surface of the metal particle 11, and the coupling agent is adhered to the surface of the metal particle 11.

It is sufficient that at least one alkoxy group is contained in the coupling agent, it is preferable that two or more alkoxy groups are contained, and it is more preferable that three such alkoxy groups are contained as in the above formula. That is, it is preferable that the coupling agent contains a dialkoxy group, and it is more preferably that the coupling agent contains a trialkoxy group. The coupling agent containing a trialkoxy group reacts with three hydroxy groups generated on the surface of the metal particle 11. Therefore, the coating film 12 derived from the coupling agent has good adhesion to the metal particle 11. Since the coupling agent containing a trialkoxy group is also excellent in film forming property, it is possible to obtain the coating film 12 having excellent continuity. Such a coating film 12 contributes to further increasing the fluidity of the additive manufacturing powder 1.

According to the coupling agent containing a trialkoxy group, even when the functional group is thermally decomposed after the coating film 12 is formed, the remaining part can continue to cover the surface of the metal particle 11. Specifically, when the functional group is thermally decomposed, a hydroxy group bonded to a Si atom is generated instead. The number of the hydroxy group is smaller than the number of the hydroxy group initially generated on the surface of the metal particle 11.

FIG. 13 is a table schematically showing a state of the coupling agent containing a trialkoxy group after hydrolysis and before the reaction with the hydroxy groups generated on the surface of the metal particle 11, a state immediately after formation of the coating film, and a state after the functional group contained in the coating film is thermally decomposed.

As shown in FIG. 13, the coupling agent containing a trialkoxy group is adhered to the surface of the metal particle 11 by the trialkoxy group reacting with the three hydroxy groups generated on the surface of the metal particle 11, that is, hydrogen bonding. Then, in the coating film formation step S13 described later, a dehydration condensation reaction occurs and a covalent bonding occurs, so that the coating film 12 is obtained. Then, when the functional group is thermally decomposed, a hydroxy group is generated after the functional group. As a result, the number of the hydroxy group generated on the coating film 12 can be made smaller than that of the hydroxy group initially generated on the surface of the metal particle 11. Therefore, by forming the coating film 12, moisture resistance can be maintained even when the functional group is thermally decomposed.

As described above, examples of the functional group contained in the coupling agent include a cyclic structure-containing group, a fluoroalkyl group, and a fluoroaryl group.

Among these, examples of a coupling agent having a cyclic structure-containing group include a coupling agent having an aryl group and a coupling agent having a cyclic ether group.

Further, among these, examples of the coupling agent having an aryl group include:
phenyltrimethoxysilane represented by the following formula (A-1), 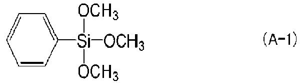
phenyltriethoxysilane represented by the following formula (A-2), 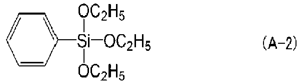
dimethoxydiphenylsilane represented by the following formula (A-3), and 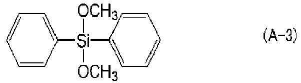
2,2-dimethoxy-1-phenyl-1-aza-2-silacyclopentane represented by the following formula (A-4).

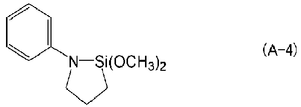

Examples of the coupling agent having a cyclic ether group include:
3-glycidoxypropylmethyldimethoxysilane represented by the following formula (A-5), 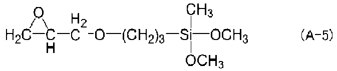
3-glycidoxypropyltrimethoxysilane represented by the following formula (A-6), 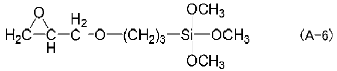
3-glycidoxypropylmethyldiethoxysilane represented by the following formula (A-7), and 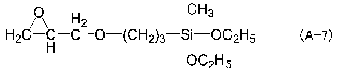
3-glycidoxypropyltriethoxysilane represented by the following formula (A-8).

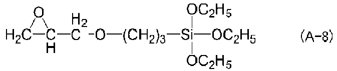

Examples of the coupling agent having a fluoroalkyl group include:
trimethoxy(3,3,3-trifluoropropyl)silane represented by the following formula (B-1), 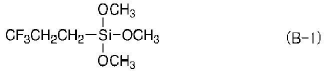
trimethoxy(1H,1H,2H,2H-tridecafluoro-n-octyl)silane represented by the following formula (B-2), and 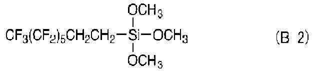
trimethoxy(1H,1H,2H,2H-nonafluorohexyl)silane represented by the following formula (B-3).

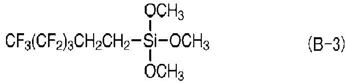

Examples of the coupling agent having a fluoroaryl group include:
trimethoxy(11-pentafluorophenoxyundecyl)silane represented by the following formula (C-1), and 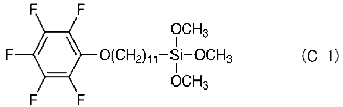
pentafluorophenyldimethylchlorosilane represented by the following formula (C-2).

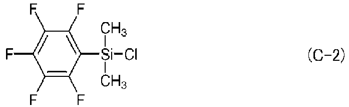

An adding amount of the coupling agent is not particularly limited, and is preferably 0.01 mass% or more and 1.00 mass% or less, and more preferably 0.05 mass% or more and 0.50 mass% or less, with respect to the metal particles 11.

The coupling agent is supplied by a method such as standing in a chamber and spraying into a chamber.

### 4.3. Coating Film Formation Step

In the coating film formation step S13, the metal particles 11 to which the coupling agent is adhered are heated. Accordingly, the coating film 12 is formed on the surfaces of the metal particles 11, and the additive manufacturing powder 1 is obtained. In addition, the unreacted coupling agent can be removed by heating.

A heating temperature of the metal particles 11 to which the coupling agent is adhered is not particularly limited, and is preferably 50°C or higher and 300°C or lower, and more preferably 100°C or higher and 250°C or lower. A heating time is preferably 10 minutes or longer and 24 hours or shorter, and more preferably 30 minutes or longer and 10 hours or shorter. Examples of an atmosphere of the heating treatment include an air atmosphere and an inert gas atmosphere.

As described above, the method for producing the additive manufacturing powder 1 according to the present embodiment includes the preparation step S11, the coupling agent reaction step S12, and the coating film formation step S13. In the preparation step S11, the metal powder containing the metal particles 11 is prepared. In the coupling agent reaction step S12, the coupling agent having a functional group is reacted with the metal powder, so that the coupling agent is adhered to the surfaces of the metal particles 11. In the coating film formation step S13, the metal powder to which the coupling agent is adhered is heated to form the coating film 12 on the surfaces of the metal particles 11. Accordingly, the additive manufacturing powder 1 is obtained. The average particle diameter of the additive manufacturing powder 1 is 3.0 µm or more and 30.0 µm or less. The functional group contained in the coupling agent includes a cyclic structure-containing group, a fluoroalkyl group, or a fluoroaryl group.

Accordingly, the additive manufacturing powder 1 having excellent fluidity even in a high temperature environment can be obtained. Since such an additive manufacturing powder 1 has excellent fluidity regardless of environments, when the powder layers 31 and 32 are formed by an additive manufacturing method, the powder layers 31 and 32 can be formed with a uniform thickness. Accordingly, the additive manufactured product 5 having a desired shape can be produced with high dimensional accuracy by an additive manufacturing method.

The additive manufactured product 5 according to the present embodiment includes the additive manufactured product 1 and the binder that binds the particles of the additive manufactured product 1. Such an additive manufactured product 5 has high dimensional accuracy benefiting from the high fluidity of the additive manufacturing powder 1.

Further, the metal sintered body 10 according to the present embodiment is a sintered body of the additive manufactured product 5. As described above, since the additive manufactured product 5 has high dimensional accuracy, the metal sintered body 10 can be finally produced with high dimensional accuracy by using the additive manufactured product 5.

The metal sintered body 10 as described above can be used as a material constituting all or a part of, for example, transportation equipment parts such as automobile parts, bicycle parts, railroad vehicle parts, ship parts, aircraft parts, and space transportation parts, electronic device parts such as personal computer parts, mobile phone terminal parts, tablet terminal parts, and wearable terminal parts, parts for electrical equipment such as refrigerators, washing machines, and air conditioners, mechanical parts such as machine tools and semiconductor manufacturing equipment, parts for plants such as nuclear power plants, thermal power plants, hydropower plants, refineries, and chemical complexes, and ornaments such as watch parts, metal tableware, jewelry, and eyeglass frames.

The additive manufacturing powder, the method for producing the additive manufacturing powder, the additive manufactured product, and the metal sintered body according to the present disclosure are described above based on the illustrated embodiment, but the present disclosure is not limited thereto. For example, the additive manufacturing powder and the additive manufactured product of the present disclosure may be those to which any component is added to the above-described embodiment.

The method for producing the additive manufacturing powder according to the present disclosure may be one in which any desired step is added to the above-described embodiment.

### Examples

Next, specific examples of the present disclosure will be described.

### 5. Production of Additive Manufacturing Powder

### 5.1. Example 1

First, a powder of precipitation hardening stainless steel 17-4PH produced by the water atomization method was prepared. Then, 100 g of the prepared metal powder was pretreated. Next, a coupling agent and water were mixed to prepare a solution, and then this solution was heated to 200°C and sprayed onto the metal powder by spray coating. Then, the metal powder sprayed with the solution was dried. A using amount of the coupling agent was 0.1 mass% of the metal powder.

### 5.2. Examples 2 to 6

Additive manufacturing powders were obtained in the same manner as in Example 1 except that production conditions for the additive manufacturing powders were changed as shown in Table 1.

### 5.3. Comparative Examples 1 to 7

Additive manufacturing powders were obtained in the same manner as in Example 1 except that production conditions for the additive manufacturing powders were changed as shown in Table 1. Symbols of chemical formulas shown in Table 1 correspond to the following compounds.
D-1: methyltrimethoxysilane
D-2: propyltrimethoxysilane
D-3: decyltrimethoxysilane
D-4: octadecyltrimethoxysilane
D-5: vinyltrimethoxysilane
D-6: aminotrimethoxysilane

### 6. Evaluation of Additive Manufacturing Powder

### 6.1. Filling Property

In a 50 mL screw cap bottle, 50 g of the powder of each Example and Comparative Example was added. Then, with the screw cap bottle being erected, a height from a bottom surface to a top surface of the powder was measured, and a filling property of the powder was evaluated according to the height. This filling property was evaluated in light of the following evaluation criteria.
A: The height is 25 mm or less.
B: The height is more than 25 mm and 30 mm or less.
C: The height is more than 30 mm.

Evaluation results are shown in Table 1.

### 6.2. Tapping Property

In a 50 mL screw cap bottle, 50 g of the powder of each Example and Comparative Example was added. Then, the screw cap bottle was tapped on a desk for 10 times. Then, with the screw cap bottle being erected, a height from a bottom surface to a top surface of the powder was measured, and a tapping property of the powder was evaluated according to the height. This tapping property was evaluated in light of the following evaluation criteria.
A: The height is 19 mm or less.
B: The height is more than 19 mm and is 25 mm or less.
C: The height is more than 25 mm.

Evaluation results are shown in Table 1.

### 6.3. Aggregation Property

In a 50 mL screw cap bottle, 50 g of the powder of each Example and Comparative Example was added. Then, the screw cap bottle was rotated for 10 times around an axis passing through a center of a bottom surface of the screw cap bottle. Then, an aggregation state of the powder was observed from an outside of the screw cap bottle, and an aggregation property of the powder was evaluated according to the aggregation state. This aggregation property was evaluated in light of the following evaluation criteria.
A: Aggregation
C: No aggregation

Evaluation results are shown in Table 1.

### 6.4. Contact Angle

A contact angle of the powder of each Example and Comparative Example with water was measured by the following procedure.

First, a double-sided tape was attached on a flat surface. Next, the powder was spread on the double-sided tape. Then, the spread powder was lightly pressed with a dispensing spoon.

Next, extra powder was blown off with an air blower. As described above, a test piece for measuring the contact angle with water was obtained.

Next, a contact angle of 3 µL of pure water in the test piece was measured by a θ/2 method with Drop Master 500, a contact angle measuring device and manufactured by Kyowa Interface Science Co., Ltd. Then, the measured contact angle was evaluated in light of the following evaluation criteria.
A: The contact angle is 110° or more.
B: The contact angle is 95° or more and less than 110°.
C: The contact angle is 80° or more and less than 95°.
D: The contact angle is less than 80°.

Measurement results are shown in Table 1.

### 6.5. Bulk Density

A bulk density of the powder of each Example and Comparative Example was measured by the method for measuring an apparent density of metal powders specified in JIS Z2504:2012.

### 6.6. Tap Density

A tap density of the powder of each Example and Comparative Example was measured by Powder Tester (registered trademark) PT-X, a powder property evaluation device and manufactured by Hosokawa Micron Corporation. The number of taps was set to 125.

### 6.7. Heat Resistance

The powder of each Example and Comparative Example was subjected to a heating treatment at 200°C for 24 hours in an air atmosphere. Next, the filling property, the aggregation property, the contact angle, the bulk density, and the tap density of the heat-treated powder were measured again. Then, measured values were evaluated in light of the above-mentioned evaluation criteria. Evaluation results are shown in Table 1.

Evaluation criteria for the bulk density and the tap density are as follows. A decrease amount in the following evaluation criteria is a difference between a value before the heating treatment, which is set as 100%, and a value after the heating treatment.

### Evaluation Criteria for Bulk Density

A: The decrease amount due to the heating treatment is 1.0% or less.
B: The decrease amount due to the heating treatment is more than 1.0% and 2.5% or less.
C: The decrease amount due to the heating treatment is more than 2.5%.

### Evaluation Criteria for Tap Density

A: The decrease amount due to the heating treatment is 2.5% or less.
B: The decrease amount due to the heating treatment is more than 2.5% and is 5.0% or less.
C: The decrease amount due to the heating treatment is more than 5.0%.

**Table 1**

| | Production conditions for additive manufacturing powder | | | | Evaluation result for additive manufacturing powder | | | | | | | | | | |
|---|---|---|---|---|---|---|---|---|---|---|---|---|---|---|---|
| | Coating film | Coupling agent | | | Before heating treatment | | | | | | After heating treatment | | | | |
| | | Functional group | Hydrolysable group | Chemical formula | Filling property | Tapping property | Aggregation property | Contact angle | Bulk density | Tap Density | Filling property | Aggregation property | Contact angle | Bulk density | Tap Density |
| Example 1 | Yes | Phenyl group | Trimethoxy group | A-1 | A | A | A | A | - | - | A | A | A | A | A |
| Example 2 | Yes | Phenyl group | Triethoxy group | A-2 | A | A | A | A | - | - | A | A | A | A | A |
| Example 3 | Yes | Phenyl group | Dimethoxy group | A-3 | A | A | A | A | - | - | A | A | B | A | A |
| Example 4 | Yes | Epoxy group | Trimethoxy group | A-6 | A | A | A | A | - | - | B | A | B | A | B |
| Example 5 | Yes | Fluoroalkyl group | Trimethoxy group | B-1 | A | A | A | A | - | - | A | A | A | A | A |
| Example 6 | Yes | Fluorophenyl group | Trimethoxy group | C-1 | A | A | A | A | - | - | A | A | A | A | A |
| Comparative Example 1 | No | - | - | - | C | B | C | C | - | - | C | C | C | C | C |
| Comparative Example 2 | Yes | Methyl group | Trimethoxy group | D-1 | A | A | A | A | - | - | B | A | C | B | B |
| Comparative Example 3 | Yes | Propyl group | Trimethoxy group | D-2 | A | A | A | A | - | - | B | A | C | B | B |
| Comparative Example 4 | Yes | Decyl group | Trimethoxy group | D-3 | B | A | A | A | - | - | B | A | C | B | B |
| Comparative Example 5 | Yes | Octadecyl group | Trimethoxy group | D-4 | B | A | A | A | - | - | B | A | C | B | B |
| Comparative Example 6 | Yes | Vinyl group | Trimethoxy group | D-5 | A | A | A | A | - | - | B | A | C | B | B |
| Comparative Example 7 | Yes | Amino group | Trimethoxy group | D-6 | A | A | A | A | - | - | B | A | C | B | B |

As shown in Table 1, the additive manufacturing powder of each Example has a filling property, contact angle, bulk density, and tap density better than those of the powders of Comparative Examples not only before the heating treatment but also after the heating treatment. Therefore, it is confirmed that the additive manufacturing powder of each Example is excellent in fluidity even in a high temperature environment.

The contact angle is preferably 110° or more. Since the additive manufacturing powder having such a contact angle has particularly low hygroscopicity, the additive manufacturing powder exhibits good fluidity even in a humid environment.

FIG. 14 shows measurement results of bulk densities of the powders of Example 1, Reference Example and Comparative Example 1. FIG. 14 is a graph showing comparison of the bulk densities of the powders in Comparative Example 1, Reference Example, and Example 1. The powder in Reference Example is a powder in which a coating film containing silica is formed on the surface of the metal particles.

As shown in FIG. 14, it is confirmed that the powder in Example 1 has a bulk density higher than that of the powder in Reference Example and the powder in Comparative Example 1. Accordingly, it can be seen that the powder in Example 1 has good fluidity. In addition, the powders in other Examples and the powders in other Comparative Examples show the same tendency as the powder in Example 1 and the powder in Comparative Example 1, respectively.

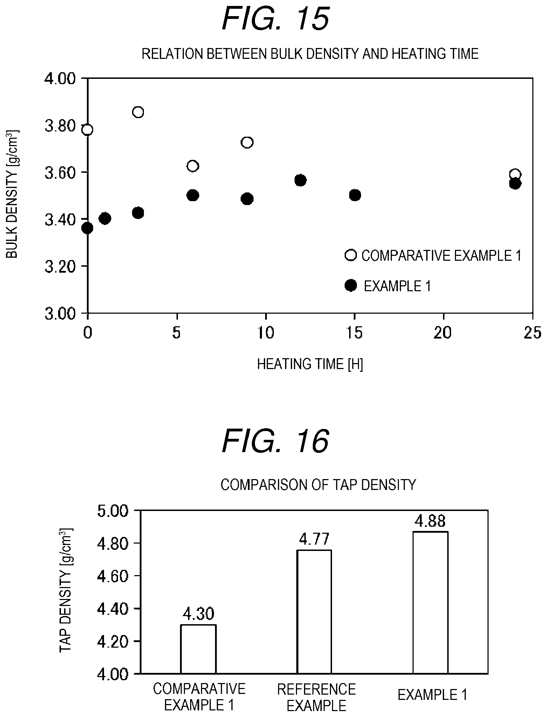

When the time of the heating treatment described above was changed, a change in bulk density of the powder was measured. Results are shown in FIG. 15. FIG. 15 is a graph showing a relation between a heating treatment time on a horizontal axis and a bulk density on a vertical axis of the powders in Example 1 and Comparative Example 1.

As shown in FIG. 15, in the powder in Example 1, even when the heating treatment time is long, a decrease in bulk density is prevented, and rather, the bulk density is increased. Therefore, it can be seen that in the powder in Example 1, the fluidity does not easily decrease even when the powder placed in a high temperature environment is repeatedly reused. In contrast, since the bulk density of the powder in Comparative Example 1 decreases depending on the heating time, it can be seen that the fluidity thereof easily decreases when the powder is placed in a high temperature environment. In addition, the powders in other Examples and the powders in other Comparative Examples show the same tendency as the powder in Example 1 and the powder in Comparative Example 1, respectively.

Further, FIG. 16 shows measurement results of tap densities of the powders in Example 1, Reference Example, and Comparative Example 1. FIG. 16 is a graph showing comparison of the tap densities of the powders in Comparative Example 1, Reference Example, and Example 1.

As shown in FIG. 16, it is confirmed that the powder in Example 1 has a tap density higher than that of the powder in Reference Example and the powder in Comparative Example 1. Accordingly, it can be seen that the powder in Example 1 has good fluidity.

## Claims

1. An additive manufacturing powder, comprising:
a metal powder; and
a coating film provided on a particle surface of the metal powder and containing a compound derived from a coupling agent having a functional group, wherein
the additive manufacturing powder has an average particle diameter of 3.0 µm or more and 30.0 µm or less, and
the functional group includes a cyclic structure-containing group, a fluoroalkyl group, or a fluoroaryl group.

2. The additive manufacturing powder according to claim 1, wherein
the coating film is a monomolecular film made of the compound.

3. The additive manufacturing powder according to claim 1, wherein
when the additive manufacturing powder is heated in air at 200°C for 24 hours, a decrease rate in bulk density is 2.5% or less with respect to a bulk density before heating.

4. A method for producing an additive manufacturing powder, comprising:
preparing a metal powder;
reacting a coupling agent having a functional group with the metal powder to adhere the coupling agent to a particle surface of the metal powder; and
heating the metal powder to which the coupling agent is adhered and forming a coating film on the particle surface, to obtain the additive manufacturing powder, wherein
the additive manufacturing powder has an average particle diameter of 3.0 µm or more and 30.0 µm or less, and
the functional group includes a cyclic structure-containing group, a fluoroalkyl group, or a fluoroaryl group.

5. The method for producing an additive manufacturing powder according to claim 4, wherein
the coupling agent contains a trialkoxy group.

6. An additive manufactured product, comprising:
the additive manufacturing powder according to claim 1; and
a binder configured to bind particles of the additive manufacturing powder.

7. A metal sintered body, which is a sintered body of the additive manufactured product according to claim 6.
